# EUROPÄISCHE PATENTANMELDUNG

(11) **EP 2 518 215 A2**
(43) Veröffentlichungstag der Anmeldung: **31.10.2012**
(21) Anmeldenummer: 12002932.7
(22) Anmeldetag: 26.04.2012
(51) Int. Cl.: E02D 17/20

(54) **Auffangnetz vorzugsweise für eine Steinschlag- bzw. Lawinenschutzverbauung**

(30) Priorität: 27.04.2011 CH 7362011
(71) Anmelder: Geobrugg AG, 8590 Romanshorn (CH)
(72) Erfinder: Von Allmen, Hans Peter, CH-1712 Tafers (CH)
(74) Vertreter: Luchs, Willi

(57) **Zusammenfassung**

Die Erfindung betrifft ein Auffangnetz vorzugsweise für eine Steinschlag- bzw. Lawinenschutzverbauung mit wenigstens einem Netz (1). In diesem Netz (1) sind dehnbare Elemente zur Steigerung seines Absorptionsvermögens integriert. Die Anordnung bewirkt, dass das Drahtgeflecht beim Aufprall eines Objektes auf das Netz besser die Impaktenergie des Aufpralls durch die sich dann wieder auseinanderziehende Maschen der Maschenstränge absorbiert.

## Beschreibung

Die Erfindung betrifft ein Auffangnetz nach dem Oberbegriff des Anspruches 1.

Derartige Auffangnetze werden bekanntlich als Barrieren gegen Steinschlag, Erdrutsche und ähnliche Naturgefahren eingesetzt. Sie können darüberhinaus auch zum Absperren von zu schützenden Zonen zu Land und auf Gewässern eingesetzt werden, um das Eindringen von Fahrzeugen und sonstigen unerwünschten Objekten in bestimmten Bereichen des Gewässers zu verhindern.

Es werden Auffangnetze in der Gestalt von Diagonalgeflechten verwendet, wie solche beispielsweise in den Druckschriften EP 979 329 oder WO 2005/120744 geoffenbart sind. Sie weisen rhomboidförmige Maschen auf und bilden eine dreidimensionale matratzenartige Struktur mit Maschensträngen aus vorzugsweise hochfestem Stahldraht. Diagonalgeflechte lassen sich rechtwinklig zu den Strängen nur wenig verformen, so dass sie die kinetische Energie eines auf sie aufprallenden Objektes nur in beschränktem Umfang aufnehmen können.

Entsprechendes gilt auch für Ringnetze mit ineinandergeschlauften Ringen aus Drähten, wie sie z.B. in der US 5,597,017 geoffenbart sind. Solche Ringnetze können sich zwar durch Verformung der Ringe zu Mehrzwecken verhältnismässig stark verformen. Die damit erzielte Energieabsorption ist jedoch auch hier in vielen Fällen unbefriedigend.

Um die Standfestigkeit der Auffangnetze zu verbessern, ist es bekannt, diese mit externen Bremsen auszustatten. Solche Bremsen sind in den auf Zug beanspruchten Rückhalteseilen, Randseilen und seitlichen Seilen des Auffangnetzes eingebaut. Eine solches System ist in der Druckschrift EP 1 870 522 geoffenbart. Dieses ist konstruktiv aufwendig, kostenintensiv, und unterstützt nur beschränkt das Absorptionsvermögen des Auffangnetzes beim Aufprall eines bewegten Objekts in das Netz. Der Erfindung liegt die Aufgabe zugrunde, diese Nachteile zu vermeiden und ein Auffangnetz der Eingang genannten Art zu schaffen, welches sich ohne externe Bremsmittel durch eine hohe Absorptionsfähigkeit auszeichnet.

Diese Aufgabe wird erfindungsgemäss dadurch gelöst, dass im Netz mitverformbare Elemente zur Steigerung seiner Absorptionsvermögens integriert sind.

Das Netz ist dadurch insgesamt stärker verformbar und kann dementsprechend besser den Aufprall eines bewegten Objektes standhalten.

In einer ersten Variante sind die mitverformbaren Elemente als Drahtfedern ausgebildet, wobei mindestens eine Drahtfeder zwei aneinandergeschobene Maschenstränge des Drahtgeflechts zusammenhält. Die Drahtfeder wird beim Aufprall eines bewegten Objektes mitgestreckt und bewirkt durch die sich dabei auseinanderziehenden Maschenstränge, dass das Drahtgeflecht den Impact des Aufpralls besser absorbiert.

In einer zweiten Variante besteht das Auffangnetz aus einem Diagonalgeflecht mit liegend angeordneten Maschen und einem vorzugsweise als Randstück aufgestellten Diagonalgeflecht mit stehend angeordneten Maschen, das als grossflächiges Mitverformungselement wirksam ist, dessen stehenden Maschen sich beim Aufprall leicht zu liegenden verformen.

Weitere bevorzugte Ausgestaltungen des erfindungsgemässen Auffangnetz es bilden den Gegenstand der übrigen Ansprüche.

Die Erfindung wird nachfolgend anhand zweier Ausführungsbeispiele unter Bezugnahme auf die Zeichnung näher erläutert. Es zeigen:
- Fig. 1: eine Vorderansicht eines als Diagonalgeflecht ausgebildeten Netzes,
- Fig. 2: eine Detailansicht des Diagonalgeflechtes nach Fig. 1,
- Fig. 3: einen Schnitt durch das Diagonalgeflecht aus Fig. 2,
- Fig. 4: eine Ansicht des Diagonalgeflechtes nach Fig. 1 mit zwei aneinandergeschobenen Maschensträngen,
- Fig. 5: eine Detailansicht auf die aneinandergeschobenen Maschenstränge gemäss Fig. 4,
- Fig. 6: einen Schnitt durch die aneinandergeschobenen Maschenstränge aus Fig. 5,
- Fig. 7: eine Ansicht des Diagonalgeflechtes gemäss Fig. 4 mit den zwei aneinandergeschobenen und mit einer Schraubenfeder verbundenen Strängen,
- Fig. 8: eine Detailansicht des Diagonalgeflechtes gemäss Fig.7,
- Fig. 9: einen Schnitt durch die aneinandergeschobenen und mit einer Schraubenfeder verbundenen Stränge aus Fig.8,
- Fig. 10: eine Ansicht auf das Diagonalgeflecht gemäss Fig. 7 nach einer Beanspruchung rechtwinklig zu den aneinandergeschobenen und mit einer Schraubenfeder verbundenen Strängen,
- Fig. 11: eine Detailansicht des Diagonalgeflechtes Fig. 10,
- Fig. 12: einen Schnitt Diagonalgeflechtes nach Fig. 11,
- Fig. 13: eine Ansicht auf eine Schraubenfeder zum Verbinden der aneinandergeschobenen Stränge,
- Fig. 14: einen Schnitt durch die Schraubenfeder gemäss Fig. 13,
- Fig. 15: ein Kraft-Weg-Diagramm für die Schraubenfeder aus Fig. 13, und
- Fig. 16: eine weitere Variante eines erfindungsgemässen Auffangnetzes in teilweiser schematischer Ansicht dargestellt.

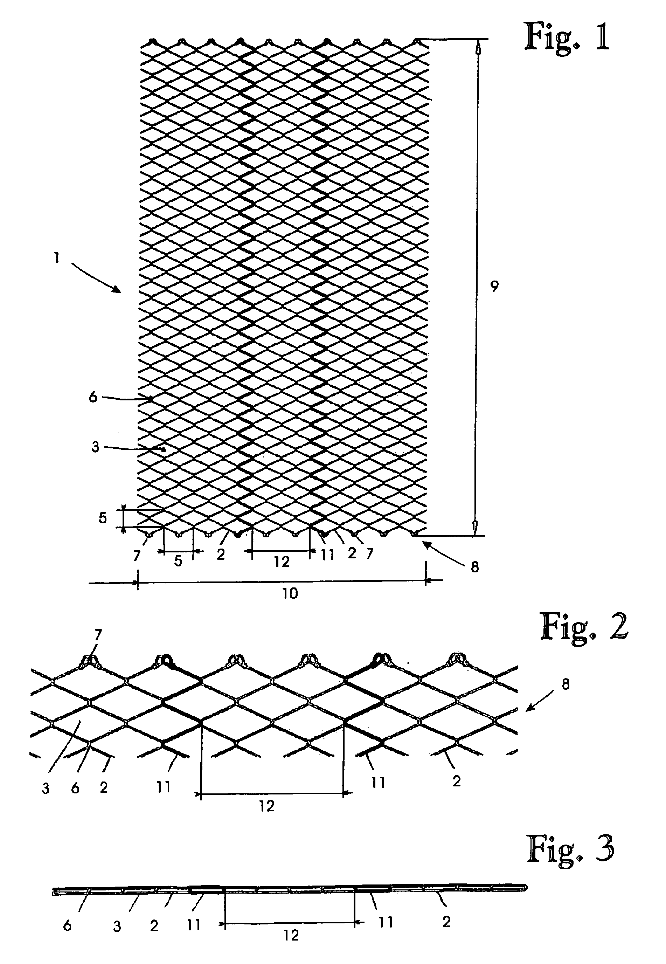

Ein in Fig. 1 bis Fig. 3 gezeigtes Auffangnetz ist als Diagonalgeflecht 1 ausgebildet, welches sich vorzugsweise für Steinschlag- oder Lawinenschutzverbauungen eignet und an nicht näher gezeigten aufrecht stehenden Stützen an einem Abhang befestigt ist.

Dieses Diagonalgeflecht 1 hat gemäss Fig. 3 eine matratzenartige Struktur mit Strängen 2 und rhomboidförmigen Maschen 3, welche jeweils eine Maschenlänge 4 und eine Maschenbreite 5 aufweisen, wobei die Stränge 2 in den Maschenecken 6 gelenkig ineinandergreifen. Die Strangenden weisen paarweise gelenkige Verbindungen in Gestalt von Schlaufen 7 entlang den längsseitigen Rändern 8 des Geflechts auf.

Da die Maschenstränge 2 im geflochtenen Zustand zueinander gelenkig sind, lässt sich das Diagonalgeflecht 1 mit einer Rollenbreite 9 und einer Rollenlänge 10 gerollt oder gefaltet transportieren.

Die zwei zeichnerisch hervorgehobenen Maschenstränge 11 des Drahtgeflechts sind voneinander um den Betrag 12 von zwei Maschenlängen 4 beabstandet. Sie befinden sich vorzugsweise im mittleren Bereich des Drahtgeflechts.

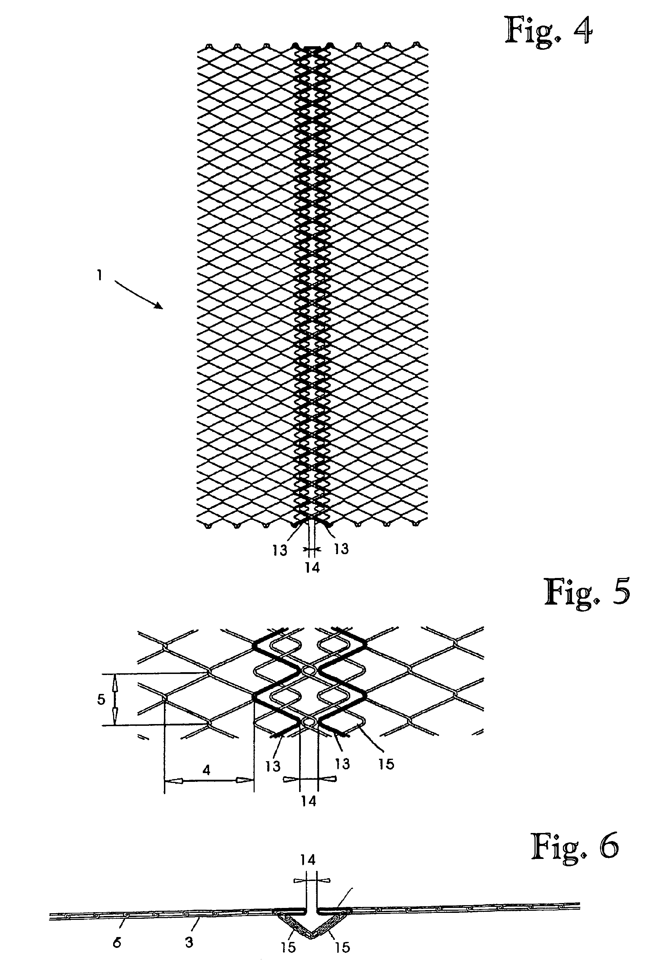

Fig. 4 bis Fig. 6 zeigen das Drahtgeflecht 1 nach dem Aneinanderschieben der Maschenstränge 13 mit einer geeigneten Vorrichtung. Die Maschenstränge 13 sind danach nur um einen Betrag 14 voneinander beanstandet. Die dabei überbrückten Maschenstränge 15 bleiben in entlasteter Weise ineinandergeschoben oder durchhängend am Geflecht.

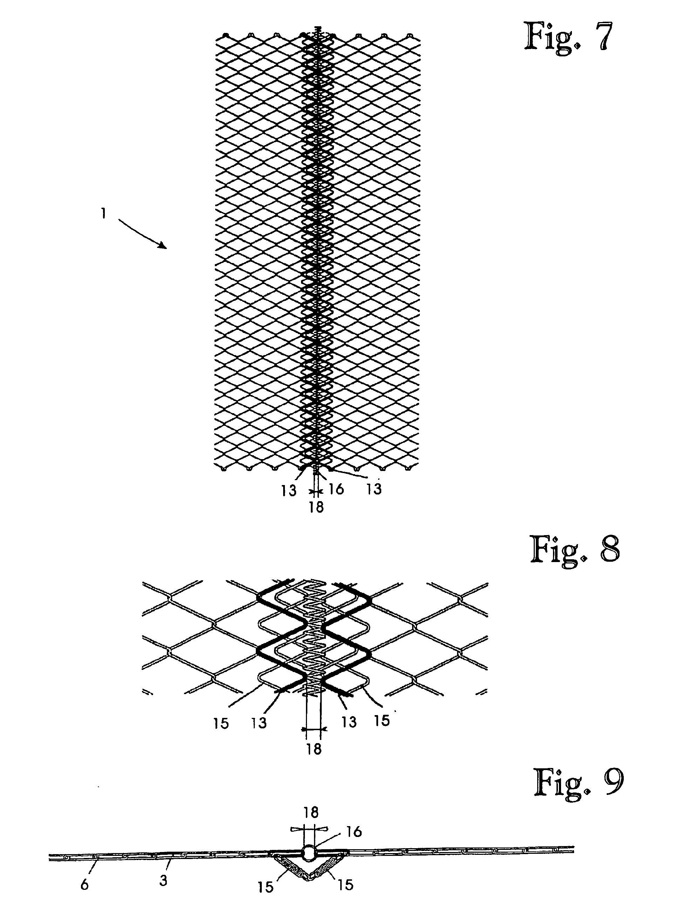

In einem weiteren Arbeitsschritt gemäss Fig. 7 bis Fig. 9 ist erfindungsgemäss eine als mitverformbares Element vorgesehene Schraubenfeder 16 mit einem Durchmesser 18 zum Zusammenhalten der Maschenstränge 13 in diesen eingedreht. Diese Schraubenfeder 16 weist eine Steigung und einen Durchmesser 18 auf, welche auf die Steigung der Maschinenstränge abgestimmt sind, damit die Schraubenfeder 16 nach beispielsweise zwei Umgängen wieder bei der nächsten Schlaufe des anliegenden Maschenstranges 13 umschlungen ist.

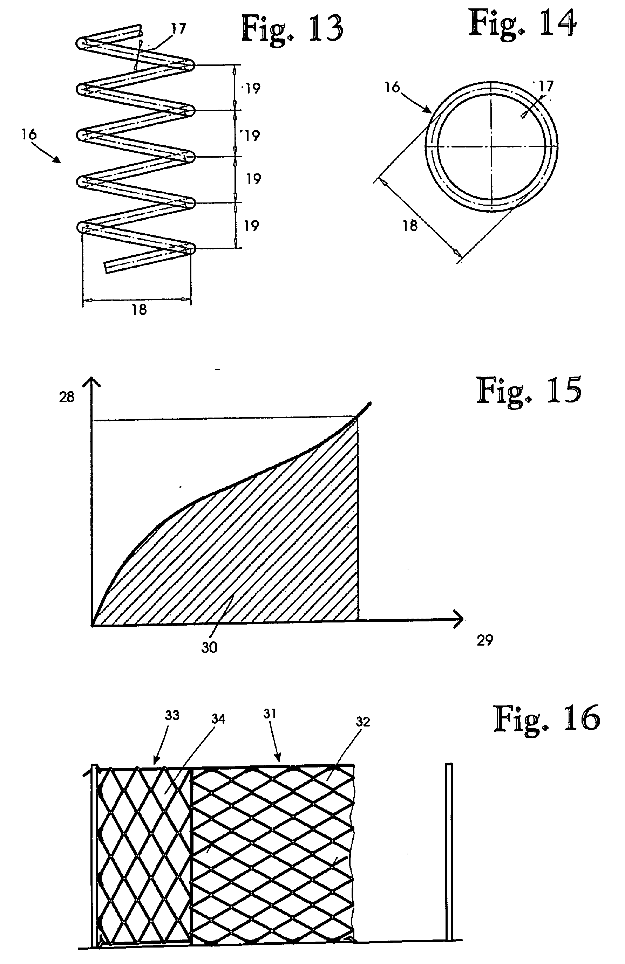

Wie aus Fig. 13 und Fig. 14 ersichtlich, ist sie als vorwiegend plastisch verformbare Drahtfeder mit einem Drahtdurchmesser 17 und einer Ganghöhe 19 pro 360° Windung aus einem Einzeldraht oder einer Drahtlitze, bevorzugt aus hochfestem Draht mit einer Zugfestigkeit von mindestens 1.000 N/mm², vorzugsweise von mindestens 1.770 N/mm², hergestellt. Bei Zugbeanspruchung weist die Feder über ihre Streckung hin ansteigende Federkräfte auf, weil alle Windungen gleichzeitig beansprucht werden. Die Feder streckt sich dabei unter gleichzeitiger Verkleinerung des Windungsdurchmessers und Vergrösserung der Ganghöhe, und bewirkt damit, dass ihr Widerstand gegen weiteres Strecken ständig grösser wird.

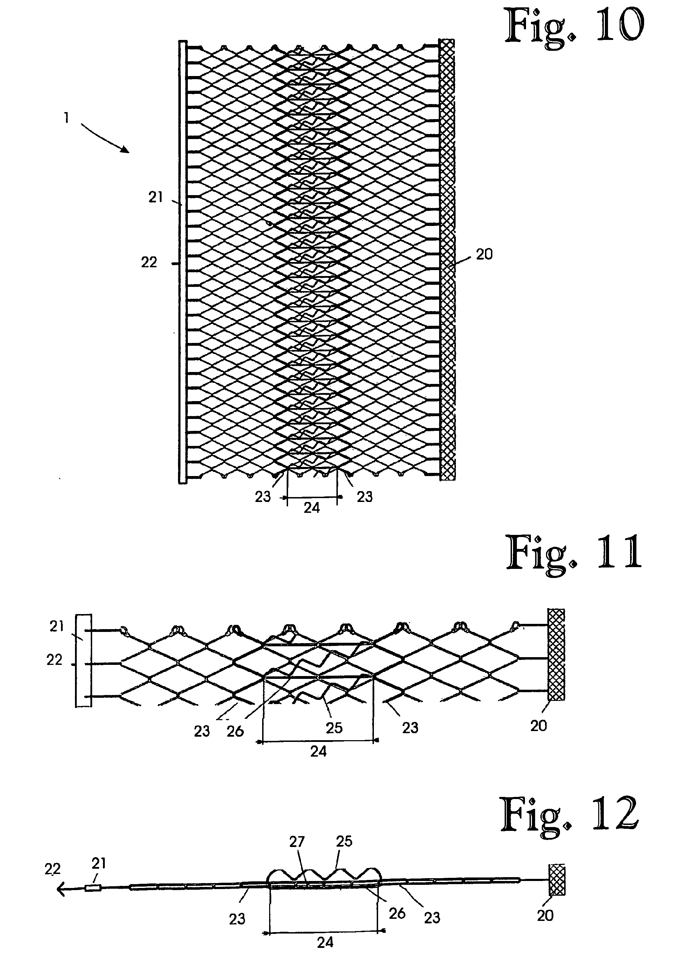

Fig. 10 bis Fig. 12 veranschaulichen das Diagonalgeflecht 1 mit einer festen Fixierung 20 und einer beweglichen Fixierung 21. Durch Einwirkung der äusseren Kraft 22 auf die bewegliche Fixierung 21 werden die Maschenstränge 23 auseinandergezogen, bis das Netz die gestreckte Ausgangslage gemäss Fig. 1 erreicht, in welcher der Abstand 24 zwischen beiden Strängen wieder der zweifachen Maschenlänge 4 entspricht und das Diagonalgeflecht 1 seine Ausgangsgeometrie zurückerhält. Gleichzeitig werden die als dehnbare Elemente quer angeordneten Schraubenfedern 25, welche endseitig an den zusammengezogenen Maschensträngen 23 befestigt sind, mitgestreckt, mit geradegezogenen Windungen 26. Die Schraubenfedern 25 bzw. die Maschenstränge 27 gemäss Fig. 11 und Fig. 12 sind in gestrecktem Zustand dargestellt.

Die Streckung und Rückverformung des Drahtgeflechts, die Mitverformung der Drahtfeder und die damit einhergehende Reibung an den Umlenkstellen der Maschenecken des Geflechts bringen es mit sich, dass diese ausreichend viel Energie aufnehmen kann und dadurch besser in der Lage ist, beim Aufprall eines bewegten Objektes die Impaktenergie des Objektes unbeschadet zu absorbieren.

Als Drahtfeder werden plastisch verformbare Federn bevorzugt, da sonst bei einer vorwiegend elastischen Verformbarkeit, wie sie z.B. bei nicht überstreckten Federn aus Federstahl oder Gummibänder gegeben ist, die von ihnen aufgenommene kinetische Energie nur temporär gespeichert und anschliessend mehrheitlich wieder an den abgebremsten Körper zurückgegeben würde, was diesen erneut in Bewegung setzen würde.

Beim beschriebenen Ausführungsbeispiel ist die Drahtfeder einstückig ausgebildet und erstreckt sich über die Gesamthöhe des Geflechts. Sie kann aber auch unterteilt sein, und die einzelnen Teilfedern können über die Gesamthöhe es Geflechts verteilt sein. Die beschriebene Federanordnung kann auch in mehrere voneinander beanstandete Strangpaare, die jeweils aneinandergeschoben sind, eingebaut werden.

Die aneinandergeschobenen Maschenstränge sind vertikal ausgerichtet, weil das Diagonalgeflecht mit liegend angeordneten Maschen aufgespannt ist. Bei einer anderen Anordnung des Geflechts kann dementsprechend auch eine andere Ausrichtung der aneinandergeschobenen Maschenstränge erfolgen.

Die Erfindung kann nicht nur bei Diagonalgeflechten mit rhomboidförmigen Maschen, sondern auch etwa bei Auffangnetz en mit ringförmigen Maschen eingesetzt werden. Als verformbare Verbindungselemente sind auch Schäkel, Klammern und ähnliche plastisch streckbare Verbindungselemente verwendbar.

Die im Ausführungsbeispiel verwendete Drahtfeder ist dort parallel zu den aneinandergeschobenen Maschensträngen ausgerichtet. Es ist aber auch im Rahmen der Erfindung möglich, sie je nach Geometrie oder Beanspruchung des Geflechts geneigt zu den Maschensträngen auszurichten.

Bei der Variante nach Fig. 16 besteht das Auffangnetz 1 aus einem Diagonalgeflecht 31 mit liegend angeordneten Maschen 32 und einem Diagonalgeflecht 33 mit stehend angeordneten Maschen 34, das als Randstück des Geflechts aufgestellt ist. Damit verlaufen die gewundenen Drähte 33' bei dem Diagonalgeflecht 33 mit den stehend angeordneten Maschen 34 jeweils in horizontaler Richtung und wirken damit bei einem Steineinschlag oder dergleichen und dem folglichen Spannen des Auffangnetzes wie eine Feder. Zudem sind die rhomboidförmig ausgebildeten Maschen 32, 34 der beiden Diagonalgeflechte mit einer Maschenlänge 4 und eine Maschenbreite 5 (siehe Fig. 1) versehen, bei welcher die Maschenlänge 4 vorteilhaft länger als die Maschenbreite 5 ist. Beide Diagonalgeflechte 31 und 33 sind mit einem Seil, Drahtschlingen, Schäkeln, Ösen oder anderen Mitteln 35 miteinander verbindbar.

Das Geflecht 33 des Randstücks zeichnet sich dadurch aus, dass seine stehenden Maschen bei einem Aufprall sich leicht zu liegenden verformen. Dadurch wirkt es als grossflächiges Mitverformungselement zur Steigerung des Absorptionsvermögens des Geflechts. Es ist selbstverständlich möglich, das Auffangnetz beidseitig mit derartig leicht verformbaren Randstücken zu versehen. Zusätzlich hat dieses Randnetz den Vorteil, dass es auch nach der Verformung das Randfeld vollständig ausfüllt und somit keine nachfolgenden Blöcke passieren lässt. Es sind auch bei diesem Auffangnetz keine zusätzlichen bremsenden Mittel, welche normalerweise in den Tragseilen bzw. Abspannseilen enthalten sind, notwendig.

Die Elemente 16 bzw. 33 können im Rahmen der Erfindung auch nachträglich ohne grossen Aufwand in vorhandene Auffangnetze eingebaut bzw. nach einem Einschlag einfach ausgewechselt werden.

Die Erfindung ist mit den erläuterten Ausführungsbeispielen ausreichend dargetan. Sie könnte aber noch in anderen Varianten ausgeführt sein. So könnte zum Beispiel das Netz aus ineinandergeschlauften Ringen gebildet sein, bei welchem solche erfindungsgemässe Verbindungselemente ähnlicher Weise eingebaut werden könnten.

## Patentansprüche

1. Auffangnetz vorzugsweise für eine Steinschlag- bzw. Lawinenschutzverbauung, mit wenigstens einem Netz (1), zum Abfangen bewegter Objekte durch Absorption ihrer kinetischen Energie, **dadurch gekennzeichnet, dass**
im Netz (1) dehnbare Elemente (16, 25, 33) zur Steigerung seines Absorptionsvermögens integriert sind.

2. Auffangnetz nach Anspruch 1, **dadurch gekennzeichnet, dass** die mitverformbaren Elemente durch mindestens eine Drahtfeder (16) gebildet sind, die zwei aneinandergeschobene Maschenstränge (13) des Drahtgeflechts zusammenhält.

3. Auffangnetz nach Anspruch 2, **dadurch gekennzeichnet, dass** das als Netz vorgesehene Drahtgeflecht (1) als Diagonalgeflecht mit rhomboidförmigen Maschen (3) ausgebildet ist, wobei zwei um vorzugsweise zwei Maschenlänge (4) auseinanderliegende Maschenstränge (13) des Drahtgeflechts an den Umlenkstellen der Maschen mit einer darin eingedrehten Schraubenfeder (16) verbunden sind.

4. Auffangnetz nach Anspruch 2 oder 3, **dadurch gekennzeichnet, dass** die Drahtfeder (16) im unbelasteten Zustand die Maschenstränge (13) um einen Betrag aneinanderschiebt, der so bemessen ist, dass deren Maschen bei gestreckter Drahtfeder wie im unbelasteten Zustand vor dem Einbau der Drahtfeder ineinandergreifen.

5. Auffangnetz nach einem der Ansprüche 2 bis 4, **dadurch gekennzeichnet, dass** die Drahtfeder (16) vorwiegend plastisch verformbar ist.

6. Auffangnetz nach einem der Ansprüche 2 bis 5, **dadurch gekennzeichnet, dass** die Drahtfeder (16) einen kreisförmigen Querschnitt und eine Ganghöhe pro 360° Windung aufweist, und aus einem Einzeldraht oder einer Drahtlitze, vorzugsweise aus hochfestem Draht hergestellt ist.

7. Auffangnetz nach Anspruch 1, **dadurch gekennzeichnet, dass** das Netz mindestens ein Diagonalgeflecht (31) mit liegend angeordneten Maschen (32) und wenigstens ein aufgestelltes Diagonalgeflecht (33) mit stehend angeordneten Maschen (34) als dehnbares Element umfasst.

8. Auffangnetz nach Anspruch 7, **dadurch gekennzeichnet, dass** das Diagonalgeflecht (33) mit den stehend angeordneten Maschen (34) als dehnbares Element als Randstück aufgestellt ist, wobei es als grossflächiges Mitverformungselement zur Steigerung des Absorptionsvermögens des Netzes wirksam ist.

9. Auffangnetz nach Anspruch 7 oder 8, **dadurch gekennzeichnet, dass** die gewundenen Drähte (33') beim Diagonalgeflecht (33) mit den stehend angeordneten Maschen (34) jeweils annähernd in horizontaler Richtung verlaufen und damit bei einem Steineinschlag oder dergleichen und dem folglichen Spannen des Auffangnetzes wie eine Feder wirken.

10. Auffangnetz nach Anspruch 7, 8 oder 9, **dadurch gekennzeichnet, dass** beide Diagonalgeflechte (31, 33) miteinander mit Drahtschlingen, Schäkeln, Ösen, wenigstens einem Seil oder dergleichen Elementen (35) verbunden sind.
